# EUROPÄISCHE PATENTSCHRIFT

(11) **EP 3 389 178 B1**
(45) Veröffentlichungstag und Bekanntmachung des Hinweises auf die Patenterteilung: **02.09.2020**
(21) Anmeldenummer: 18163260.5
(22) Anmeldetag: 22.03.2018
(51) Int. Cl.: H02P 29/024, H02M 1/32

(54) **STROMRICHTEREINRICHTUNG FÜR EINE ELEKTRISCHE MASCHINE, KRAFTFAHRZEUG UND VERFAHREN ZUM BETREIBEN EINER STROMRICHTEREINRICHTUNG**
CONVERTER FOR AN ELECTRIC MACHINE, MOTOR VEHICLE AND METHOD FOR OPERATING A CONVERTER
DISPOSITIF CONVERTISSEUR DE COURANT POUR UNE MACHINE ÉLECTRIQUE, VÉHICULE AUTOMOBILE ET PROCÉDÉ DE FONCTIONNEMENT D'UN DISPOSITIF CONVERTISSEUR DE COURANT

(30) Priorität: 11.04.2017 DE 102017206169
(43) Veröffentlichungstag der Anmeldung: 17.10.2018
(73) Patentinhaber: AUDI AG, 85045 Ingolstadt (DE)
(72) Erfinder: Apelsmeier, Andreas, 85131 Pollenfeld (DE); Brüske, Stephan, 24116 Kiel (DE)

(56) Entgegenhaltungen:
- DE-A1- 10 249 568
- DE-A1-102005 045 323
- DE-A1-102012 209 276
- DE-A1-102014 107 561
- US-A1- 2008 304 197
- US-A1- 2011 221 370
- US-A1- 2012 068 645

## Beschreibung

Die Erfindung betrifft eine Stromrichtereinrichtung für eine elektrische Maschine, umfassend Schaltmittel mit mehreren Schaltelementen zur Erzeugung eines mehrphasigen Wechselstroms für die elektrische Maschine und mehrere Phasenleiter zum Führen eines jeweiligen durch ein Schaltmittel erzeugten Wechselstroms zur elektrischen Maschine, wobei einer Anzahl von ersten Phasenleitern, die um eins geringer als die Gesamtzahl der Phasenleiter ist, ein Strommessmittel zugeordnet und eine Steuereinrichtung vorgesehen ist, welche zur Ermittlung eines einen Strom entlang des zweiten Phasenleiters beschreibenden Rechenwerts aus ersten Messwerten der Strommessmittel ausgebildet ist.

Elektrische Maschinen, die mit einem mehrphasigen Wechselstrom, insbesondere einem dreiphasigen Drehstrom, angesteuert werden, benötigen eine Stromrichtereinrichtung, die aus einer Gleichspannung oder einer Zwischenkreisspannung den mehrphasigen Wechselstrom erzeugt. Zur Regelung der elektrischen Maschine anhand eines jeweiligen über die ersten Phasenleiter zur elektrischen Maschine geführten Wechselstroms ist seine Stromstärke durch ein Strommessmittel zu erfassen. Dabei genügt es bei einer Verschaltung ohne Neutralleiter, die Ströme entlang einer Anzahl von ersten Phasenleitern, die um eins geringer als die Gesamtzahl der Phasenleiter ist, zu erfassen und den Strom des zweiten Phasenleiters lediglich zu berechnen. An die Strommessmittel werden hohe Genauigkeitsanforderungen gestellt, wobei derzeit Abweichungen von nur ca. 3 bis 5 % toleriert werden. Im Bereich der Automobilindustrie werden darüber hinausgehende Safety-Anforderungen an die Ermittlung der Stromstärke des entlang der Phasenleiter fließenden Wechselstroms gestellt. So sieht die ISO 26262 die Sicherheitsstufe ASIL D für die Genauigkeit der Ermittlung des Drehmoments der elektrischen Maschine vor, was durch eine redundante Ermittlung der entlang der Phasenleiter fließenden Ströme erfüllt werden kann.

Dazu ist es aus dem Stand der Technik bekannt, auch dem zweiten Phasenleiter ein Strommessmittel zuzuordnen und so die Stromstärken redundant zu messen. Nachteilig ist daran, dass ein solches zusätzliches Strommessmittel einen hohen Bauraumbedarf nach sich zieht und die Stromrichtereinrichtung nicht zuletzt auch hinsichtlich ihrer Kosten aufwendiger macht. Zusätzlich muss die Peripherie für ein solches Strommessmittel, wie beispielsweise eine Versorgung, eine Verkabelung, EMV-Maßnahmen und ein Kanal zur Analog-Digital-Wandlung, bereitgestellt werden.

Aus US 2012/068645 ist eine Steuerungseinrichtung für eine rotierende elektrische Maschine, die über eine Gleichspannungswelle betrieben wird, bekannt. Die Steuerungseinrichtung weist einen DC-AC-Konverterkreis mit seriell verschalteten Kreisen auf, von denen jeder Schaltelemente für die Hochpotential- und die Niederpotentialseite aufweist. Wenn ein Kurzschluss an den Schaltelementen auftritt, werden aus Sicherheitsgründen alle Schaltelemente ausgeschaltet und eine die Maschine und die Batterie verbindende Verbindungsleitung wird geöffnet. In diesem Fall wird ein Schaltelement, das Teil der Schaltelemente ist, angeschaltet, wobei das Potential an allen Anschlüssen der elektrischen Maschine das gleiche ist. Der Ort des Kurzschlusses wird identifiziert, basierend auf Änderungen im Stromfluss über die Maschine und als Antwort auf das Anschalten des Schaltelements. Die Änderungen werden entweder als Abweichung des Stroms von einem Nullpunkt oder einer Änderung des Absolutwerts des Stroms erfasst.

Der Erfindung liegt mithin die Aufgabe zugrunde, eine redundante Ermittlung der Wechselströme der Phasenleiter mit geringerem Aufwand und geringeren Bauraumanforderungen zu ermöglichen.

Diese Aufgabe wird erfindungsgemäß bei einer Stromrichtereinrichtung für eine elektrische Maschine der eingangs genannten Art dadurch gelöst, dass die Steuereinrichtung dazu ausgebildet ist, den Rechenwert anhand wenigstens eines zweiten Messwerts einer einem Schaltelement zugeordneten Kurschlusserfassungseinrichtung zu plausibilisieren.

Der Erfindung liegt die Überlegung zugrunde, anstelle eines zusätzlichen Strommessmittels für den zweiten Phasenleiter wenigstens einen zweiten Messwert der Kurschlusserfassungseinrichtung, die einem Schaltelement zugeordnet ist, zur redundanten Ermittlung der Stromstärken heranzuziehen und so den aus den ersten Messwerten gebildeten Rechenwert anhand des oder der zweiten Messwerte zu plausibilisieren. Da derartige Kurzschlusserfassungseinrichtungen typischerweise zur Erkennung von Brücken- und/oder Windungskurzschlüssen ohnehin in einer Stromrichtereinrichtung vorgesehen sind, kann der wenigstens eine zweite Messwert vorteilhafterweise ohne das Vorsehen zusätzlicher Bauelemente gewonnen werden. Dabei ist zu beachten, dass die zweiten Messwerte der Kurschlusserfassungseinrichtungen an sich die Genauigkeitsanforderungen zur Regelung des Drehmoments und/oder der Drehzahl der elektrischen Maschine nach derzeitigem Stand der Technik nicht erfüllen, jedoch eine hinreichende Genauigkeit für die Plausibilisierung der Ströme entlang der Phasenleiter bieten.

Die Schaltmittel der erfindungsgemäßen Stromrichtereinrichtung sind typischerweise als Halbbrückenschaltung ausgebildet. Die Schaltelemente eines jeweiligen Schaltmittels können in Reihe geschaltet sein, wobei der Phasenleiter von einer Mittelanzapfung zwischen den Schaltelementen ausgeht. Ein jeweiliges Strommessmittel kann einen in den Phasenleiter geschalteten Nebenschlusswiderstand (Shunt) umfassen. Alternativ kann ein jeweiliges Strommessmittel einen magnetischen Sensor, beispielsweise einen Hall-Sensor, zur Strommessung aufweisen. Die Steuereinrichtung ist üblicherweise zur Regelung des Drehmoments und/oder der Drehzahl der elektrischen Maschine ausgebildet. Die Steuereinrichtung kann Anschlüsse für Verbindungsleitungen zu den Strommessmitteln und den Kurzschlusserfassungseinrichtungen aufweisen.

Bei der erfindungsgemäßen Stromrichtereinrichtung ist die Steuereinrichtung bevorzugt ferner dazu ausgebildet, zur Plausibilisierung eine Verstärkungsdrift eines Strommessmittels zu ermitteln. Unter einer Verstärkungsdrift ist die sich in einem Fehlerfall des Strommessmittels ergebende proportionale Abweichung des ersten Messwerts von dem tatsächlichen Strom entlang des ersten Phasenleiters zu verstehen. Tritt im Laufe des Betriebs der Stromrichtereinrichtung eine solche Verstärkungsdrift auf, kommt es zu einem fehlerhaften ersten Messwert, der sich auch auf den Rechenwert auswirkt. Allerdings betrifft dieser Fehler nicht den zweiten Messwert der Kurzschlusserfassungseinrichtung, so dass die Verstärkungsdrift anhand einer fehlenden Plausibilität des Rechenwerts und/oder eines ersten Messwerts bezüglich wenigstens eines zweiten Messwerts erkennbar ist. Eine Zuordnung von ersten und zweiten Messwerten kann in einer Speichereinheit der Steuereinrichtung abgelegt sein.

Es wird bei der erfindungsgemäßen Stromrichtereinrichtung zudem bevorzugt, wenn die Steuereinrichtung ferner dazu ausgebildet ist, zur Plausibilisierung eine Abweichung erster Messwerte eines Strommessmittels von wenigstens einem zweiten Messwert bezüglich eines Schaltelements des Schaltmittels, welches den entlang der dem Strommessmittel zugeordneten ersten Phasenleitung geführten Wechselstrom erzeugt, zu ermitteln. Es kann mithin anhand eines oder mehrerer zweiter Messwerte des oder eines jeweiligen Schaltelements ermittelt werden, ob der erste Messwert plausibel ist. Beispielsweise können verschiedene zweite Messwerte der Kurschlusserfassungseinrichtungen mit verschiedenen ersten Messwerten für einen fehlerfreien Betriebsfall registriert sein, so dass ein während des Betriebs der Stromrichtereinrichtung auftretender Messfehler erkennbar ist.

Alternativ oder zusätzlich kann bei der erfindungsgemäßen Stromrichtereinrichtung vorgesehen sein, dass die Steuereinrichtung ferner dazu ausgebildet ist, zur Plausibilisierung eine Abweichung des Rechenwerts von einem zweiten Messwert bezüglich eines Schaltelements, welches den Strom entlang der zweiten Phasenleitung erzeugt, zu ermitteln. In diesem Fall können zweite Messwerte mit plausiblen Rechenwerten in einem fehlerfreien Betriebsfall der ersten Strommessmittel registriert sein, wobei eine Abweichung des Rechenwerts von einem zweiten Messwert ermittelbar ist. Es ist auch hier möglich, dass eine Zuordnung von Rechenwerten zu zweiten Messwerten in der oder einer Speichereinheit der Steuereinrichtung abgelegt ist.

Zur Verbesserung der Genauigkeit der Plausibilisierung des Rechenwerts kann eine wenigstens eine Temperatur an einem oder den Schaltelementen erfassende und/oder modellierende Temperaturermittlungseinrichtung vorgesehen sein, wobei die Steuereinrichtung ferner zur Berücksichtigung der Temperatur bei der Plausibilisierung, insbesondere zur Korrektur des oder der zweiten Messwerte, ausgebildet ist. Diese Maßnahme beruht auf der Erkenntnis, dass die bezüglich der Schaltelemente erfassten zweiten Messwerte von der Temperatur des Schaltelements abhängig sind. Bei Transistoren als Schaltelementen ist dies beispielsweise die Sperrschichttemperatur. Die Temperaturermittlungseinrichtung weist bevorzugt einen Temperatursensor auf, der die Temperatur an einer Stelle eines Leistungsmoduls, welches die Schaltelemente realisiert, erfasst, wobei aus dieser Temperatur auf die Temperatur der Schaltelemente geschlossen wird. Es kann auch jedem Schaltmittel oder jedem Schaltelement ein Temperatursensor der Temperaturermittlungseinrichtung zugeordnet sein. Der Temperatursensor oder die Temperatursensoren der Temperaturermittlungseinrichtung können temperaturabhängige Widerstandselemente oder temperatursensitive Dioden sein. Alternativ oder zusätzlich kann die Temperaturermittlungseinrichtung die Temperatur anhand eines Temperaturmodells, beispielsweise auf Basis von Betriebsparametern der Stromrichtereinrichtung und/oder von Messwerten des oder der Temperatursensoren, ermitteln.

Zweckmäßigerweise ist die Steuereinrichtung ferner dazu ausgebildet, ein Fehlersignal auszugeben und/oder die Stromrichtereinrichtung zu deaktivieren, wenn sich aus der Plausibilisierung das Vorliegen eines fehlerhaften Rechenwerts ergibt. Alternativ oder zusätzlich kann, wenn zweite Messwerte bezüglich Schaltelementen verschiedener Schaltmittel vorliegen, auch eine Korrektur des fehlerhaften Rechenwerts anhand der zweiten Messwerte erfolgen.

Typischerweise umfasst ein jeweiliges Schaltmittel zwei IGBT oder zwei Leistungs-MOSFET als Schaltelemente.

Bevorzugt weist die Kurzschlusserfassungseinrichtung zur Bereitstellung des zweiten Messwerts ein an einen Sense-Ausgang des Schaltelements angeschlossenes Messmittel auf. Ein solcher Sense-Ausgang ist typischerweise ein vierter Transistoranschluss, an dem ein mit dem Kollektorstrom bzw. Drainstrom korrelierender Strom ausgebbar ist. Zweckmäßigerweise ist an den Sense-Anschluss ein Widerstand angeschlossen, wobei die über diesen Widerstand abfallende Spannung oder der durch den Widerstand fließende Strom mittels eines Messmittels der Kurzschlusserfassungseinrichtung als zweiter Messwert erfassbar ist. Alternativ oder zusätzlich kann die Kurzschusserfassungseinrichtung zur Bereitstellung des zweiten Messwerts ein zur Erfassung einer über dem Schaltelement abfallenden Spannung, insbesondere einer Kollektor-Emitter-Spannung und/oder einer Drain-Source-Spannung, verschaltetes Messmittel aufweisen. In diesem Fall kann die erfasste Spannung als zweiter Messwert verwendet werden.

Die der Erfindung zugrunde liegende Aufgabe wird ferner erfindungsgemäß gelöst durch ein Kraftfahrzeug, umfassend eine elektrische Maschine zum teilweisen oder vollständigen Antrieb des Kraftfahrzeugs und eine erfindungsgemäße Stromrichtereinrichtung, wobei die Phasenleiter mit der elektrischen Maschine verbunden sind.

Außerdem wird die der Erfindung zugrunde liegende Aufgabe erfindungsgemäß gelöst durch ein Verfahren zum Betreiben einer Stromrichtereinrichtung für eine elektrische Maschine, umfassend einen mehrphasigen Wechselstrom für die elektrische Maschine erzeugende Schaltmittel mit mehreren Schaltelementen und mehrere einen jeweiligen durch ein Schaltmittel erzeugten Wechselstrom zur elektrischen Maschine führende Phasenleiter, wobei einer Anzahl von ersten Phasenleitern, die um eins geringer als die Gesamtzahl der Phasenleiter ist, ein Strommessmittel zugeordnet ist und ein einen Strom entlang des zweiten Phasenleiters beschreibender Rechenwert aus ersten Messwerten der Strommessmittel ermittelt wird. Das erfindungsgemäße Verfahren zeichnet sich dadurch aus, dass der Rechenwert anhand wenigstens eines zweiten Messwerts einer einem Schaltelement zugeordneten Kurschlusserfassungseinrichtung plausibilisiert wird.

Sämtliche Ausführungen zur erfindungsgemäßen Stromrichtereinrichtung lassen sich analog auf das erfindungsgemäße Kraftfahrzeug und das erfindungsgemäße Verfahren übertragen, so dass auch mit diesen die zuvor genannten Vorteile erzielt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: ein Schaltbild eines ersten Ausführungsbeispiel einer erfindungsgemäßen Stromrichtereinrichtung;
- Fig. 2: ein Schaltbild eines zweiten Ausführungsbeispiel einer erfindungsgemäßen Stromrichtereinrichtung; und
- Fig. 3: eine Prinzipskizze eines Ausführungsbeispiels eines erfindungsgemäßen Kraftfahrzeugs.

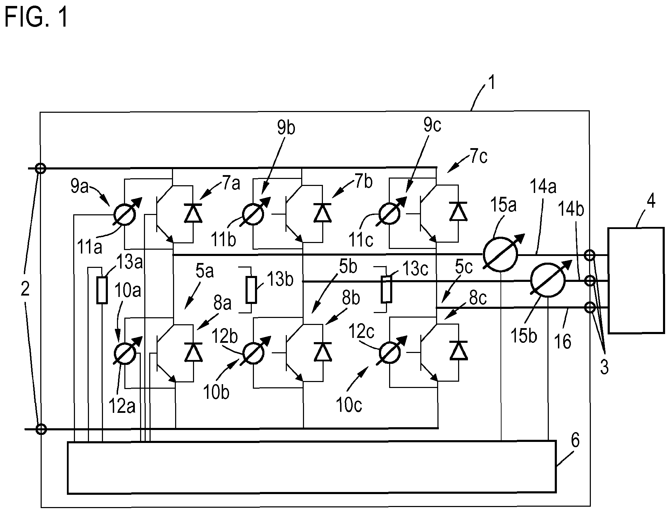

Fig. 1 zeigt ein Schaltbild eines ersten Ausführungsbeispiels einer Stromrichtereinrichtung 1, welche eine an ihrem Eingang 2 anliegende Gleichspannung in einen Dreiphasenwechselstrom an ihrem Ausgang 3 wandelt, an welchem eine elektrische Maschine 4 eingeschlossen ist.

Zwischen das hohe und das niedrige Potenzial der Gleichspannung sind drei Schaltmittel 5a, 5b, 5c geschaltet, welche im Wesentlichen identisch aufgebaut sind und exemplarisch anhand des Schaltmittels 5a im Folgenden näher erläutert werden. Dabei sind in Fig. 1 lediglich für das Schaltmittel 5a und deren zugeordnete Komponenten Verbindungen mit einer Steuereinrichtung 6 der Stromrichtereinrichtung 1 dargestellt, die aus Gründen der Übersichtlichkeit bei den Schaltmitteln 5b, 5c nicht dargestellt sind. Das Schaltmittel 5a weist zwei als Halbbrücke verschaltete Schaltelemente 7a, 8a auf, welche durch Leistungstransistoren, beispielsweise IGBT oder Leistungs-MOSFET, ausgebildet sind. Die Gate-Anschlüsse sind mit der Steuereinrichtung 6 verbunden. Durch die Ansteuerung der Gate-Anschlüsse regelt die Steuereinrichtung 6 das Drehmoment und die Drehzahl der elektrischen Maschine 4.

Den Schaltelementen 7a, 8a ist jeweils eine Kurzschlusserfassungseinrichtung 9a, 10a mit einem Messmittel 11a, 12a zur Erfassung einer über dem Schaltelement 7a, 8a abfallenden Spannung zugeordnet. Diese Spannung ist im Fall eines IGBT dessen Kollektor-Emitter-Spannung und im Fall eines Leistungs-MOSFET eine Drain-Source-Spannung. Daneben ist dem Schaltmittel 5a eine Temperaturermittlungseinrichtung 13a mit einem temperaturabhängigen Widerstand als Temperatursensor zugeordnet, welche eine Temperatur in der Umgebung der Schaltelemente 7a, 8a erfasst und/oder aus Betriebsparametern der Stromrichtereinrichtung 1 modelliert, woraus eine momentane Sperrschichttemperatur der Transistoren ableitbar ist.

Von den Mittelanzapfungen der Schaltmittel 5a, 5b gehen erste Phasenleiter 14a, 14b aus, denen jeweils ein Strommessmittel 15a, 15b zugeordnet ist. Diese Erfassen den entlang eines jeweiligen ersten Phasenleiters 14a, 14b fließenden Wechselstrom als ersten Messwert und sind mit der Steuereinrichtung 6 zur Auswertung der ersten Messwerte verbunden. Einem zweiten Phasenleiter 16, welcher vom Schaltmittel 5c ausgeht, ist kein derartiges Strommessmittel zugeordnet. Die Stromstärke des entlang des zweiten Phasenleiters 16 fließenden Wechselstroms wird als Rechenwert durch die Steuereinrichtung 6 aus den ersten Messwerten der Strommessmittel 15a, 15b errechnet.

Die Kurzschlusserfassungseinrichtungen 10a-c, 9a-c sind ebenfalls mit der Steuereinrichtung 6 verbunden und stellen dieser einen zweiten Messwert für jedes Schaltelement 7a-c, 8a-c bereit. Anhand dieser zweiten Messwerte ist ein Kurzschluss eines der Schaltelemente 7a-c, 8a-c ermittelbar, wenn ein Schaltelement 7a-c, 8a-c dauerhaft niederohmig ist. Die Steuereinrichtung 6 deaktiviert in diesem Fehlerfall die Stromrichtereinrichtung 1.

Die Steuereinrichtung 6 ist ferner dazu ausgebildet, den den Strom entlang des zweiten Phasenleiters 16 beschreibenden Rechenwert anhand der zweiten Messwerte der Kurzschusserfassungseinrichtungen 9a-c, 10 a-c zu plausibilisieren. Dies ist erforderlich, da Sicherheitsanforderungen gemäß ISO 26262 durch eine redundante Ermittlung der bei der Regelung berücksichtigten Ströme entlang der Phasenleiter 14a, 14b, 16 erfüllt werden. Die Steuereinrichtung 6 berechnet dazu aus den durch die zweiten Messwerte beschriebenen, von den Messmitteln 11a-c, 12a-c erfassten Spannungen und den bereitgestellten Gate-Spannungen anhand einer Kennlinie den durch ein jeweiliges Schaltelement 7a-c, 8a-c fließenden Strom und plausibilisiert den Rechenwert für den durch den zweiten Phasenleiter 16 fließenden Strom. Dabei korrigiert die Steuereinrichtung 6 bei Bedarf die zweiten Messwerte anhand der Messwerte der Temperaturermittlungseinrichtungen 13a-c.

Die Steuereinrichtung 6 ermittelt zur Plausibilisierung beispielsweise eine Abweichung der ersten Messwerte des Strommessmittel 15a von den zweiten Messwerten der Kurzschlusserfassungseinrichtung 9a und/oder von den zweiten Messwerten der Kurzschlusserfassungseinrichtung 10a. Dazu sind entsprechende zweite Messwerte mit ersten Messwerten für einen fehlerfreien Betriebsfall des Strommessmittels 15a registriert und in einer Look-Up-Tabelle innerhalb einer Speichereinheit der Steuereinrichtung 6 abgelegt. Tritt nun eine Verstärkungsdrift des Strommessmittels 15a auf, die sich aufgrund der daraus resultierenden falschen ersten Messwerte auf den Rechenwert auswirkt, erkennt die Steuereinrichtung 6 die Verstärkungsdrift anhand der Abweichung und stellt die Unplausibilität des Rechenwerts fest. Analog dazu können fehlerhafte erste Messwerte des Strommessmittels 15b anhand einer Abweichung von den zweiten Messwerten der Kurzschlusserfassungseinrichtung 9b und/oder von den zweiten Messwerten der Kurzschlusserfassungseinrichtung 10b erkannt werden.

Eine weitere Möglichkeit zur Plausibilisierung des Rechenwerts besteht darin, eine Abweichung des Rechenwerts von einem zweiten Messwert der Kurzschlusserfassungseinrichtung 9c und/oder der Kurzschlusserfassungseinrichtung 10c zu ermitteln. Weichen die durch die Schaltelemente 7c, 8c fließenden Ströme von dem Rechenwert, der den durch das Schaltmittel 5c erzeugten Wechselstrom entlang des zweiten Phasenleiters 16 beschreibt, ab, kann auf eine Unplausibilität des Rechenwerts geschlossen werden. Auch hier können entsprechende Rechenwerte mit zweiten Messwerten registriert und beispielsweise als Look-Up-Tabelle in der Speichereinheit der Steuereinrichtung 6 abgelegt sein.

Die Steuereinrichtung 6 gibt bei einem unplausiblen Rechenwert ein Fehlersignal über einen nicht dargestellten Signalausgang aus. Als weitere Maßnahme kann sie die Stromrichtereinrichtung 1 im Fehlerfall deaktivieren oder den Rechenwert anhand mehrerer zweiter Messwerte von mehreren Kurschlusserfassungseinrichtungen 9a-c, 10a-c korrigieren.

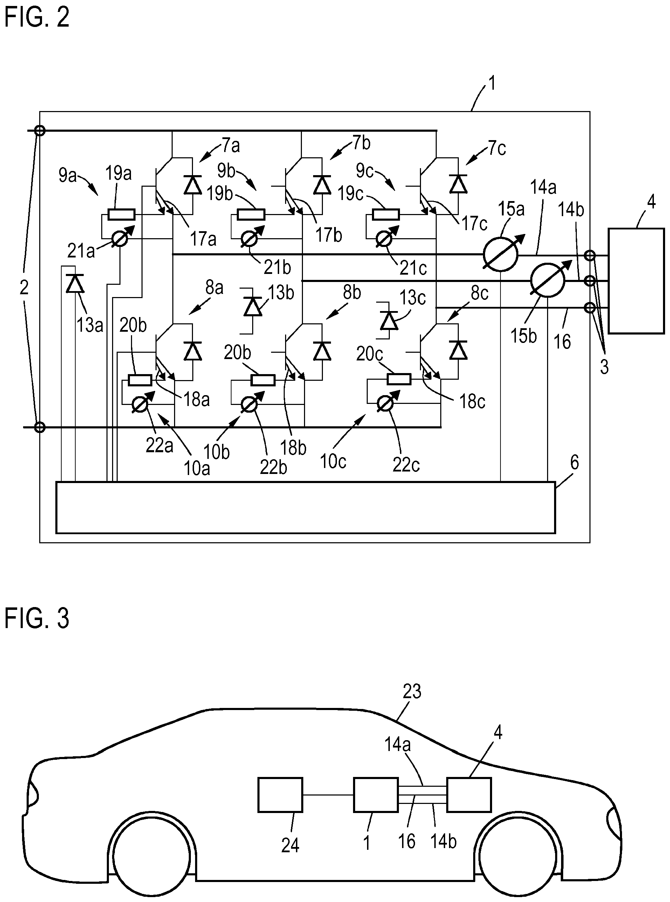

Fig. 2 zeigt ein Schaltbild eines zweiten Ausführungsbeispiels einer Stromrichtereinrichtung 1, die sich von dem in Fig. 1 gezeigten Ausführungsbeispiel dadurch unterscheidet, dass die Schaltelemente 7a-c, 8a-c jeweils als Transistor mit einem Sense-Ausgang 17a-c, 18a-c als vierten Transistoranschluss ausgebildet sind. Die Kurzschlusserfassungseinrichtungen 9a-c, 10a-c weisen in diesem Fall jeweils einen mit dem Sense-Ausgang 17a-c, 18a-c verbundenen Widerstand 19a-c, 20a-c auf, durch den ein mit dem Kollektor- bzw. Drainstrom korrelierender Messstrom fließt. Alternativ können auch Messmittel 21a-c, 22a-c verwendet werden, die die über einem jeweiligen Widerstand 19a-c, 20a-c abfallende Spannung erfassen.

Im Ausführungsbeispiel gemäß Fig. 2 sind anstelle von temperaturabhängigen Widerständen temperatursensitive Dioden als Temperatursensoren der Temperaturermittlungseinrichtungen 13a-c vorgesehen. Die Ausgestaltung der Temperaturermittlungseinrichtungen 13a-c ist jedoch grundsätzlich unabhängig von der übrigen Ausgestaltung der Stromrichtereinrichtung 1, so dass im Ausführungsbeispiel gemäß Fig. 1 auch die Dioden und im Ausführungsbeispiel gemäß Fig. 2 auch die temperaturabhängige Widerstände zum Einsatz kommen können.

Fig. 3 zeigt eine Prinzipskizze eines Ausführungsbeispiels eines Kraftfahrzeugs 23, umfassend eine elektrische Maschine 4 zum teilweisen oder vollständigen Antrieb des Kraftfahrzeugs 23 sowie eine Stromrichtereinrichtung 1 gemäß einem der vorangehend erläuterten Ausführungsbeispiele. Die Stromrichtereinrichtung 1 wird eingangsseitig von einer Hochvoltbatterie 24 mit einer Gleichspannung versorgt wird. Die ausgangsseitigen Phasenleiter 14a, 14b, 16 sind mit der elektrischen Maschine 4 verbunden.

## Patentansprüche

1. Stromrichtereinrichtung für eine elektrische Maschine, umfassend Schaltmittel (5a-c) mit mehreren Schaltelementen (7a-c, 8a-c) zur Erzeugung eines mehrphasigen Wechselstroms für die elektrische Maschine (4) und mehrere Phasenleiter (14a, 14b, 16) zum Führen eines jeweiligen durch ein Schaltmittel (5a-c) erzeugten Wechselstroms zur elektrischen Maschine (4), wobei einer Anzahl von ersten Phasenleitern (14a, 14b), die um eins geringer als die Gesamtzahl der Phasenleiter (14a, 14b, 16) ist, Strommessmittel (15a, 15b) zugeordnet sind und eine Steuereinrichtung (6) vorgesehen ist, welche zur Ermittlung eines einen Strom entlang des zweiten Phasenleiters (16) beschreibenden Rechenwerts aus ersten Messwerten der Strommessmittel (15a, 15b) ausgebildet ist,
**dadurch gekennzeichnet,**
**dass** die Steuereinrichtung (6) dazu ausgebildet ist, den Rechenwert anhand wenigstens eines zweiten Messwerts einer einem Schaltelement (7a-c, 8a-c) zugeordneten Kurschlusserfassungseinrichtung (9a-c, 10a-c) zu plausibilisieren.

2. Stromrichtereinrichtung nach Anspruch 1,
**dadurch gekennzeichnet,**
**dass** die Steuereinrichtung (6) ferner dazu ausgebildet ist, zur Plausibilisierung eine Verstärkungsdrift eines Strommessmittels (15a, 15b) zu ermitteln.

3. Stromrichtereinrichtung nach Anspruch 1 oder 2,
**dadurch gekennzeichnet,**
**dass** die Steuereinrichtung (6) ferner dazu ausgebildet ist, zur Plausibilisierung eine Abweichung erster Messwerte eines Strommessmittels (15a, 15b) von wenigstens einem zweiten Messwert bezüglich eines Schaltelements (7a, 7b, 8a, 8b) des Schaltmittels (5a, 5b), welches den entlang des dem Strommessmittel (15a, 15b) zugeordneten ersten Phasenleiters (14a, 14b) geführten Wechselstrom erzeugt, zu ermitteln.

4. Stromrichtereinrichtung nach einem der vorhergehenden Ansprüche,
**dadurch gekennzeichnet,**
**dass** die Steuereinrichtung (6) ferner dazu ausgebildet ist, zur Plausibilisierung eine Abweichung des Rechenwerts von einem zweiten Messwert bezüglich eines Schaltelements (7c, 8c), welches den Wechselstrom entlang des zweiten Phasenleiters (16) erzeugt, zu ermitteln.

5. Stromrichtereinrichtung nach einem der vorhergehenden Ansprüche,
**dadurch gekennzeichnet,**
**dass** eine wenigstens eine Temperatur an einem oder den Schaltelementen (7a-c, 8a-c) erfassende und/oder modellierende Temperaturermittlungseinrichtung (13a-c) vorgesehen ist, wobei die Steuereinrichtung (6) ferner zur Berücksichtigung der Temperatur bei der Plausibilisierung, insbesondere zur Korrektur des oder der zweiten Messwerte, ausgebildet ist.

6. Stromrichtereinrichtung nach einem der vorhergehenden Ansprüche,
**dadurch gekennzeichnet,**
**dass** die Steuereinrichtung (6) ferner dazu ausgebildet ist, ein Fehlersignal auszugeben und/oder die Stromrichtereinrichtung (1) zu deaktivieren, wenn sich aus der Plausibilisierung das Vorliegen eines fehlerhaften Rechenwerts ergibt.

7. Stromrichtereinrichtung nach einem der vorhergehenden Ansprüche,
**dadurch gekennzeichnet,**
**dass** ein jeweiliges Schaltmittel (5a-c) zwei IGBT oder zwei Leistungs-MOSFET als Schaltelemente (7a-c, 8a-c) umfasst.

8. Stromrichtereinrichtung nach einem der vorhergehenden Ansprüche,
**dadurch gekennzeichnet,**
**dass** die Kurzschlusserfassungseinrichtung (9a-c, 10a-c) zur Bereitstellung des zweiten Messwerts ein an einen Sense-Ausgang (17a-c, 18a-c) des Schaltelements (7a-c, 8a-c) angeschlossenes Messmittel (21a-c, 22a-c) und/oder ein zur Erfassung einer über dem Schaltelement (7a-c, 8a-c) abfallenden Spannung, insbesondere einer Kollektor-Emitter-Spannung und/oder einer Drain-Source-Spannung, verschaltetes Messmittel (11a-c, 12a-c) aufweist.

9. Kraftfahrzeug, umfassend eine elektrische Maschine (4) zum teilweisen oder vollständigen Antrieb des Kraftfahrzeugs (23) und eine Stromrichtereinrichtung (1) nach einem der vorhergehenden Ansprüche, wobei die Phasenleiter (14a, 14b, 16) mit der elektrischen Maschine (4) verbunden sind.

10. Verfahren zum Betreiben einer Stromrichtereinrichtung (1) für eine elektrische Maschine (4), umfassend einen mehrphasigen Wechselstrom für die elektrische Maschine (4) erzeugende Schaltmittel 5a-c) mit mehreren Schaltelementen (7a-c, 8a-c) und mehrere einen jeweiligen durch ein Schaltmittel (5a-c) erzeugten Wechselstrom zur elektrischen Maschine führende Phasenleiter (14a, 14b, 16), wobei einer Anzahl von ersten Phasenleitern (14a, 14b), die um eins geringer als die Gesamtzahl der Phasenleiter (14a, 14b, 16) ist, Strommessmittel (15a, 15b) zugeordnet sind und ein einen Strom entlang des zweiten Phasenleiters (16) beschreibender Rechenwert aus ersten Messwerten der Strommessmittel (15a, 15b) ermittelt wird,
**dadurch gekennzeichnet,**
**dass** der Rechenwert anhand wenigstens eines zweiten Messwerts einer einem Schaltelement (7a-c, 8a-c) zugeordneten Kurschlusserfassungseinrichtung (9a-c, 10a-c) plausibilisiert wird.

## Claims

1. Power converter device for an electrical machine, comprising switching means (5a-c) with a plurality of switching elements (7a-c, 8a-c) for generating a multi-phase alternating current for the electrical machine (4) and a plurality of phase conductors (14a, 14b, 16) for conducting an alternating current generated by a switching means (5a-c) to the electrical machine (4), wherein current measuring means (15a, 15b) are associated with a number of first phase conductors (14a, 14b), that is one less than the total number of phase conductors (14a, 14, 16), and a control device (6) is provided, which is designed for determining a calculated value describing a current along the second phase conductor (16) from first measured values of the current measuring means (15a, 15b),
**characterised in that**
the control device (6) is designed to check the plausibility of the calculated value by means of at least one second measured value of a short circuit detecting device (9a-c, 10a-c) associated with a switching element (7a-c, 8a-c).

2. Power converter device according to claim 1,
**characterised in that**
the control device (6) is furthermore designed to determine a gain drift of a current measuring means (15a, 15b) for a plausibility check.

3. Power converter device according to claim 1 or 2,
**characterised in that**
the control device (6) is furthermore designed to determine a deviation of first measured values of a current measuring means (15a, 15b) from at least one second measured value with respect to a switching element (7a, 7b, 8a, 8b) of the switching means (5a, 5b) for the plausibility check, which switching element generates the alternating current conducted along the first phase conductor (14a, 14b) associated with the current measuring means (15a, 15b).

4. Power converter device according to any one of the preceding claims,
**characterised in that**
the control device (6) is furthermore designed to determine a deviation of the calculated value from a second measured value with respect to a switching element (7c, 8c) for the plausibility check, which switching element generates the alternating current along the second phase conductor (16).

5. Power converter device according to any one of the preceding claims,
**characterised in that**
a temperature detecting device (13a-c), which detects and/or models at least one temperature on a switching element or the switching elements (7a-c, 8a-c), is provided, wherein the control device (6) is furthermore designed for taking into consideration the temperature during the plausibility check, in particular, for correcting the second measured value or measured values.

6. Power converter device according to any one of the preceding claims,
**characterised in that**
the control device (6) is furthermore designed to output an error signal and/or to deactivate the power converter device (1), if the existence of an incorrect calculated value results from the plausibility check.

7. Power converter device according to any one of the preceding claims,
**characterised in that**
a respective switching means (5a-c) comprises two IGBTs or two power MOSFETs as switching elements (7a-c, 8a-c).

8. Power converter device according to any one of the preceding claims,
**characterised in that**
the short-circuit detection device (9a-c, 10a-c) for providing the second measured value has a measuring means (21a-c, 22a-c) connected to a sense output (17a-c, 18a-c) of the switching element (7a-c, 8a-c) and/or a measuring means (11a-c, 12a-c) connected for detecting a voltage drop across the switching element (7a-c, 8a-c), in particular, a collector-emitter voltage and/or a drain-source voltage.

9. Motor vehicle, comprising an electrical machine (4) for the partial or complete drive of the motor vehicle (23) and a power converter device (1) according to any one of the preceding claims, wherein the phase conductors (14a, 14b, 16) are connected to the electrical machine (4).

10. Method for operating a power converter device (1) for an electrical machine (4), comprising a switching means (5a-c) with a plurality of switching elements (7a-c, 8a-c), which generates multi-phase alternating current for the electrical machine (4) and a plurality of phase conductors (14a, 14b, 16) conducting a respective alternating current generated by a switching means (5a-c) to the electrical machine, wherein current measuring means (15a, 15b) are associated with a number of first phase conductors (14a, 14b), that is one less than the total number of phase conductors (14a, 14b, 16) and a calculated value describing a current along the second phase conductor (16) is determined from first measured values of the current measuring means (15a, 15b),
**characterised in that**
the plausibility of the calculated value is checked by means of at least one second measured value of a short circuit detecting device (9a-c, 10a-c) associated with a switching element (7a-c, 8a-c).

## Revendications

1. Dispositif convertisseur de puissance pour une machine électrique, comprenant des moyens de commutation (5a-c) avec plusieurs éléments de commutation (7a-c, 8a-c) pour produire un courant alternatif polyphasé pour la machine électrique (4) et plusieurs conducteurs de phase (14a, 14b, 16) pour le guidage d'un courant alternatif respectif produit par un moyen de commutation (5a-c) vers la machine électrique (4), dans lequel des moyens de mesure de courant (15a, 15b) sont associés à un nombre de premiers conducteurs de phase (14a, 14b) qui est inférieur d'un au nombre total de conducteurs de phase (14a, 14b, 16) et un dispositif de commande (6) est prévu, lequel est réalisé pour déterminer une valeur de calcul, décrivant un courant le long du second conducteur de phase (16), à partir de premières valeurs de mesure des moyens de mesure de courant (15a, 15b),
**caractérisé en ce**
**que** le dispositif de commande (6) est réalisé pour contrôler la plausibilité de la valeur de calcul sur la base d'au moins une seconde valeur de mesure d'un dispositif de détection de court-circuit (9a-c, 10a-c) associé à un élément de commutation (7a-c, 8a-c).

2. Dispositif convertisseur de puissance selon la revendication 1,
**caractérisé en ce**
**que** le dispositif de commande (6) est réalisé en outre, pour contrôler la plausibilité, pour déterminer une dérive de gain d'un moyen de mesure de courant (15a, 15b).

3. Dispositif convertisseur de puissance selon la revendication 1 ou 2,
**caractérisé en ce**
**que** le dispositif de commande (6) est réalisé en outre, pour contrôler la plausibilité, pour déterminer un écart entre des premières valeurs de mesure d'un moyen de mesure de courant (15a, 15b) et au moins une seconde valeur de mesure en ce qui concerne un élément de commutation (7a, 7b, 8a, 8b) du moyen de commutation (5a, 5b), lequel produit le courant alternatif guidé le long du premier conducteur de phase (14a, 14b) associé au moyen de mesure de courant (15a, 15b).

4. Dispositif convertisseur de puissance selon l'une quelconque des revendications précédentes,
**caractérisé en ce**
**que** le dispositif de commande (6) est réalisé en outre, pour contrôler la plausibilité, pour déterminer un écart entre la valeur de calcul et une seconde valeur de mesure en ce qui concerne un élément de commutation (7c, 8c), lequel produit le courant alternatif le long du second conducteur de phase (16).

5. Dispositif convertisseur de puissance selon l'une quelconque des revendications précédentes,
**caractérisé en ce**
**qu'**un dispositif de détermination de température (13a-c) détectant et/ou modelant au moins une température sur un ou les éléments de commutation (7a-c, 8a-c) est prévu, dans lequel le dispositif de commande (6) est réalisé en outre pour prendre en compte la température lors du contrôle de la plausibilité, en particulier pour corriger la ou les secondes valeurs de mesure.

6. Dispositif convertisseur de puissance selon l'une quelconque des revendications précédentes,
**caractérisé en ce**
**que** le dispositif de commande (6) est réalisé en outre pour émettre un signal d'erreur et/ou pour désactiver le dispositif convertisseur de puissance (1), lorsqu'il résulte du contrôle de la plausibilité la présence d'une valeur de calcul erronée.

7. Dispositif convertisseur de puissance selon l'une quelconque des revendications précédentes,
**caractérisé en ce**
**qu'**un moyen de commutation (5a-c) respectif comprend deux transistors bipolaires à porte isolée ou deux MOSFET de puissance comme éléments de commutation (7a-c, 8a-c).

8. Dispositif convertisseur de puissance selon l'une quelconque des revendications précédentes,
**caractérisé en ce**
**que** le dispositif de détection de court-circuit (9a-c, 10a-c), pour la fourniture de la seconde valeur de mesure, présente un moyen de mesure (21a-c, 22a-c) raccordé à une sortie de détection (17a-c, 18a-c) de l'élément de commutation (7a-c, 8a-c) et/ou un moyen de mesure (11a-c, 12a-c) branché pour la détection d'une chute de tension sur l'élément de commutation (7a-c, 8a-c), en particulier d'une tension collecteur-émetteur et/ou d'une tension drain-source.

9. Véhicule à moteur, comprenant une machine électrique (4) pour l'entraînement partiel ou complet du véhicule automobile (23) et un dispositif convertisseur de puissance (1) selon l'une quelconque des revendications précédentes, dans lequel les conducteurs de phase (14a, 14b, 16) sont reliés à la machine électrique (4).

10. Procédé pour faire fonctionner un dispositif convertisseur de puissance (1) pour une machine électrique (4), comprenant des moyens de commutation (5a-c), produisant un courant alternatif polyphasé pour la machine électrique (4), avec plusieurs éléments de commutation (7a-c, 8a-c) et plusieurs conducteurs de phase (14a, 14b, 16) guidant un courant alternatif respectif produit par un moyen de commutation (5a-c) vers la machine électrique, dans lequel des moyens de mesure de courant (15a, 15b) sont associés à un nombre de premiers conducteurs de phase (14a, 14b) qui est inférieur d'un au nombre total des conducteurs de phase (14a, 14b, 16) et une valeur de calcul décrivant un courant le long du second conducteur de phase (16) est déterminée à partir de premières valeurs de mesure des moyens de mesure de courant (15a, 15b),
**caractérisé en ce**
**que** la plausibilité de la valeur de calcul est contrôlée en s'appuyant sur au moins une seconde valeur de mesure d'un dispositif de détection de court-circuit (9a-c, 10a-c) associé à un élément de commutation (7a-c, 8a-c).
